Europäisches Patentamt

European Patent Office

Office européen des brevets

(11) Publication number: **0 421 400 A2**

# EUROPEAN PATENT APPLICATION

(21) Application number: 90119001.7

(51) Int. Cl.⁵: **B65H 75/10**

(22) Date of filing: 04.10.90

(30) Priority: 04.10.89 JP 259488/89

(43) Date of publication of application:
10.04.91 Bulletin 91/15

(84) Designated Contracting States:
**DE NL**

(71) Applicant: **Fuji Photo Film Co., Ltd.**
**210 Nakanuma Minamiashigara-shi**
**Kanagawa-ken(JP)**

(72) Inventor: **Sato, Hiroki, c/o Fuji Photo Film Co.**
**Ltd.**
**No. 210, Nakanuma**
**Minami Ashigara-shi, Kanagawa-ken(JP)**
Inventor: **Shimizu, Shigehisa, c/o Fuji Photo**
**Film Co. Ltd.**
**No. 210, Nakanuma**
**Minami Ashigara-shi, Kanagawa-ken(JP)**

(74) Representative: **Patentanwälte Grünecker,**
**Kinkeldey, Stockmair & Partner**
**Maximilianstrasse 58**
**W-8000 München 22(DE)**

(54) Photosensitive material roll take-up core and method of manufacturing the same.

(57) A photosensitive material roll take-up core includes an inner core formed of a plurality of base paper strips which are wound into a tubular form and bonded together by adhesive and an elastic outer core which is wound around the inner core. The outer core is formed of a material which is the same as the material of the inner core and has been processed and provided with elasticity.

## FIG.1

# PHOTOSENSITIVE MATERIAL ROLL TAKE-UP CORE AND METHOD OF MANUFACTURING THE SAME

## BACKGROUND OF THE INVENTION

### Field of the Invention

This invention relates to a photosensitive material roll take-up core and the method of manufacturing the same.

### Description of the Prior Art

A take-up core for a photosensitive material roll is generally formed of high-density kraft paper or the like which is wound spirally and is made as hard as possible in order to obtain high compression strength. If the photosensitive material is directly wound around such a hard core, the material is imprinted with a mark of spiral unevenness on the surface of core formed by the side edges of the kraft paper which is spirally would or mark of the leading edge of the photosensitive material itself, which can result in increase or decrease in the sensitivity of the photosensitive material or fogging of the photosensitive material. In order to overcome this problem, there has been proposed, as disclosed for instance in Japanese Unexamined Utility Model Publications No. 62(1987)-164343 and 62(1987)-164275, a take-up core comprising a hard inner core formed of non-elastic material fixed by adhesive which cures after adhesion and an outer core which is of elastic material and is wrapped around the inner core and bonded thereto by flexible adhesive which does not cure after adhesion. For example, the inner core is formed by spirally winding kraft paper, and the outer core is formed by spirally winding nonwoven fabric around the inner core.

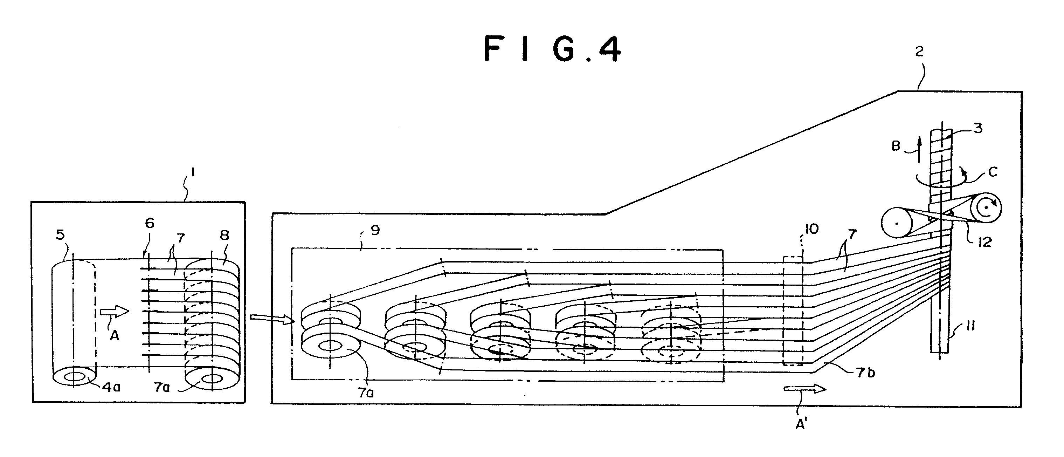

The inner core is produced by base paper cutting step shown in frame 1 in Figure 4 and a tubing step shown in frame 2 in Figure 4. Base paper roll 4a for the inner core is unwound in the direction of arrow A at a base paper feed section 5, and cut into a plurality of (e.g., ten) base paper strips 7 having a predetermined width at a cutting section 6. Each base paper strip 7 is wound into a base paper strip roll 7a at a take-up section 6. The ten base paper strip rolls 7a are transferred to a feed section 9 of a tubing machine, and are unwound in the direction of arrow A' and applied with adhesive on the rear sides at an adhesive applying section 10. At this time, the lower portion of the lowermost base paper strip 7b is not applied with adhesive. The leading end portions of the base paper strips 7 are obliquely wrapped around a spindle 11, and a belt 12 is driven in the direction of the arrow, whereby the base paper strips 7 are spirally fed upward (inthe direction of arrow B) along the spindle 11 in the direction of arrow C while being spirally wound into a tubular form with each strip overlapping with another strip and bonded thereto by the adhesive applied on the rear or inner side of each strip. Since the lowermost strip 7b is not applied with adhesive, the inner core 3 thus formed can be easily removed from the spindle 11.

Then elastic material for forming the outer core is wrapped around the inner core 3 thus formed and bonded thereto by suitable adhesive as described above.

However such a method of manufacturing the take-up core is disadvantageous in that since the materials for forming the inner and outer cores differ from each other and the adhesives for the inner and outer cores differ from each other, the manufacturing process is complicated, and at the same time, it is difficult to stabilize the manufacturing conditions due to difference in conditions of materials, applications of the adhesives, unwinding of the materials, and the like.

## SUMMARY OF THE INVENTION

In view of the foregoing observations and description, the primary object of the present invention is to provide a photosensitive material roll take-up core the whole of which is formed of a material and can be easily manufactured.

Another object of the present invention is to provide a method of manufacturing such a photosensitive material roll take-up core.

The photosensitive material roll take-up core in accordance with the present invention comprises an inner core formed of a plurality of base paper strips which are wound into a tubular form and bonded together by adhesive and an elastic outer core which is would around the inner core and characterized in that the outer core is formed of a material which is the same as the material of the inner core and has been processed and provided with elasticity.

The outer core need not be provided over the entire outer peripheral surface of the inner core but may be provided only on the part of the inner core around which the photosensitive material is to be actually wound.

The method of manufacturing a photosensitive material roll take-up core in accordance with the present invention comprises the steps of preparing a plurality of base paper strips formed of the same material, providing at least one of the base paper strips with elasticity, and spirally winding together the base paper strips into a tube with the base paper strip provided with elasticity being disposed so that it forms an upper one of the base paper strip-plies.

## BRIEF DESCRIPTION OF THE DRAWINGS

Figure 1 is a schematic cross-sectional view of a photosensitive material roll take-up core in accordance with an embodiment of the present invention,

Figure 2 is a schematic cross-sectional view showing the processed base paper strip for forming the outer core,

Figure 3 is a schematic view for illustrating a method of manufacturing a photosensitive material roll take-up core in accordance with an embodiment of the present invention, and

Figure 4 is a schematic view for illustrating a method of manufacturing an inner core of a photosensitive material roll take-up core in accordance with the prior art.

## DESCRIPTION OF THE PREFERRED EMBODIMENT

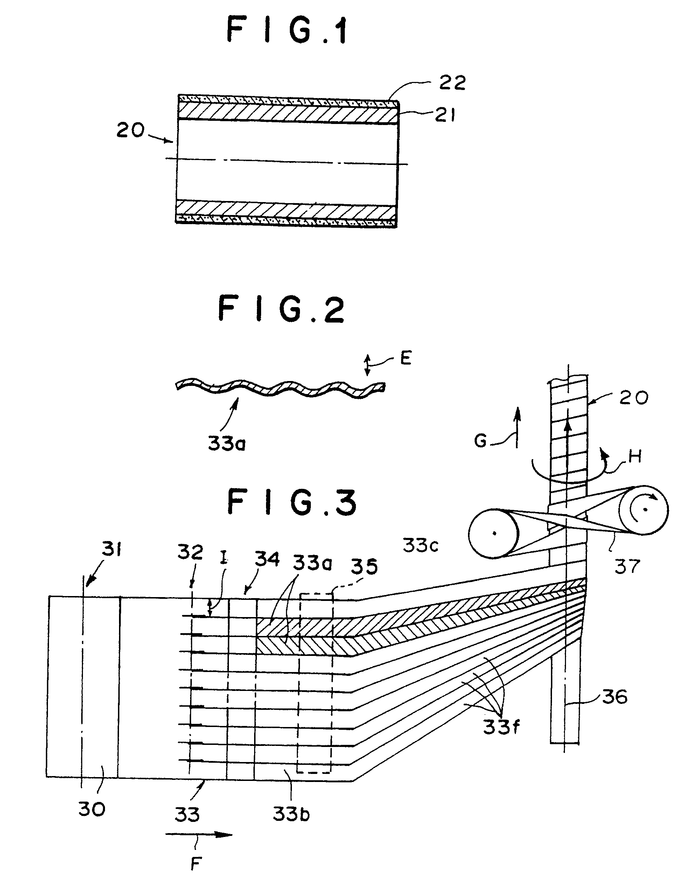

In Figure 1, a photosensitive material roll take-up core 20 in accordance with an embodiment of the present invention is substantially in a tubular form and comprises an inner core 21 which is formed by spirally winding a plurality of high-density base paper strips and bonding the plies of the base paper strips by adhesive applied to the inner side of each strip, and an outer core 22 wound around the inner core 21 and bonded thereto. The outer core 22 is formed of the same material as the inner core 22 and bonded by the same adhesive for bonding together the plies of the inner core 21 but has elasticity.

The inner core 21 is formed as hard as possible in order to increase resistance to impact of the take-up core 20. The outer core 22 is formed of base paper which is of the same material as the strips for forming the inner core 21 but has been processed to have elasticity. That is, as shown in Figure 2, each of base paper strips 33a for forming the outer core 22 is processed by knurl rolls, corrugated rolls or the like, and then the processed strips are spirally wound around the inner core 21. The outer core 22 thus formed exhibits elasticity in the direction of thickness of the strip 33a (in the direction of arrow E).

A method of manufacturing the take-up core 20 will be described with reference to Figure 3, hereinbelow. In this method, base paper strips 33a for forming the outer core 22 and base paper strips 33f for forming the inner core 21 are cut off from a single base paper 30 in one step, and are simultaneously wound into a tubular form.

The base paper 30 is unwound from a base paper feed section 31 and cut into ten base paper strips 33 having a predetermined width l at a cutting section 32. The second and third uppermost strips are processed by knurl rolls and provided with elasticity at a paper processing section 34, whereby the base paper strips 33a for forming the outer core 22 are formed. The lower seven base paper strips 33 are used as the strips 33f for forming the inner core 21. The base paper strips 33 are integrally fed in the direction of arrow F and are applied with adhesive on their inner sides at an adhesive application section 35. The lower portion of the lower most one 33b of the strips 33 is not applied with adhesive. The base paper strips 33 are further fed in the direction of the arrow F, and wound around a spindle 36. Then a belt 37 is driven in the direction of the arrow, whereby the base paper strips 33 are spirally fed upward (in the direction of arrow G) along the spindle 36 in the direction of arrow H at a constant speed while being spirally wound into a tubular form with each strip overlapping with another strip and bonded thereto by the adhesive applied on the rear side of each strip. The pitch of the spiral is set to be equal to the width of a base paper strip (the predetermined width l).

Accordingly, the lower seven base paper strips 33f in seven plies form the inner core 21, and the second and third uppermost base paper strips 33a which have been processed are wound around the inner core 21 thus formed and form the outer core 22. Further, the uppermost base paper strip 33c covers the outer peripheral surface of the outer core 22.

In accordance with this method, the base paper strips 33a for forming the outer core 22 can be wound simultaneously with the base paper strips 33f for forming the inner core 21, whereby the inner core 21 and the outer core 22 can be formed at the one time.

Further, by the uppermost base paper strip 33c, the appearance of the take-up core 20 is improved and at the same time, the photosensitive material wound around the take-up core 20 is protected from being scratched.

Further, since the lowermost base paper strip 33b which directly contacts with the spindle 36 is not applied with adhesive, the take-up core 20 obtained can be easily removed from the spindle 36.

Photosensitive materials were wound around a take-up core 20 manufactured in the manner described above and a take-up core manufactured in accordance with the prior art (having an elastic outer core formed of a material different from the material of the inner core), and imprint of various unevennesses were investigated. In either of the photosensitive materials, no mark of spiral unevenness on the surface of core formed by the side edges of the base paper strips was imprinted. However, in the case of the photosensitive material wound around the take-up core in accordance with the prior art, a mark of the leading edge of itself and a mark of adhesive tape which was used to fix the leading edge to the take-up core were imprinted on the photosensitive material. On the other hand, in the case of the photosensitive material wound around the take-up core in accordance with the present invention, neither of such marks were imprinted.

Though, in the embodiment described above, two of ten base paper strips are processed and used to form the outer core, the number of the base paper strips need not be limited to two so long as the outer core can be provided with sufficient elasticity. Further, though in the embodiment described above, the uppermost or outermost base paper strip is not processed, it may also be processed.

In order to improve the moisture resistance and/or the rigidity of the take-up core, aluminum foil or the like may be provided on the inner surface of the inner core.

The base paper strips for forming the outer core may be provided with elasticity also by embossing process, corrugating process or the like without limiting to the process by knurl rolls.

Since the take-up roll in accordance with the present invention is formed of a single material, it can be manufactured with a single base paper. Accordingly, it is possible to cut a part of the single base paper into strips for forming the outer core, provide elasticity to the strips for forming the outer core, and wind the strips for forming the outer core around strips for forming the inner core core simultaneously with winding the strips for forming the inner core into a tubular form. Thus the inner core and the outer core can be formed at one time, the manufacturing process can be simplified and the manufacturing cost of the take-up core can be lowered.

Further since the inner core and the outer core are formed of the same material, condition of application of adhesive and condition of unwinding the base paper need not be changed, and the properties of the adhesive need not be changed throughout the manufacturing process of the take-up core, which stabilizes the manufacturing conditions.

Further, in the method of manufacturing the take-up roll, the step of taking up the base paper strips cut off from the base paper and the step of feeding out each base paper strip in the tubing step are not necessary, and the steps of storing and transferring the base paper strips between the two steps are not necessary. Accordingly, labor and plant investment can be saved.

Further, base paper roll changing process can be simplified, bonding process accompanying the roll changing process can be simplified, and base paper loss inherent in the bonding process can reduced.

## Claims

1. A photosensitive material roll take-up core comprising an inner core formed of a plurality of base paper strips which are wound into a tubular form and bonded together by adhesive and an elastic outer core which is wound around the inner core characterized in that,
the outer core is formed of a material which is the same as the material of the inner core and has been processed and provided with elasticity.

2. A photosensitive material roll take-up core as defined in Claim 1 in which said outer core is formed of one or more plies of base paper strips which are of the same material as the material of the base paper strips forming said inner core and have been provided with elasticity.

3. A photosensitive material roll take-up core as defined in Claim 2 in which a base paper strip which is of the same material as the material of the base paper strips forming said inner core and has not been provided with elasticity is wound around the outer core.

4. A method of manufacturing a photosensitive material roll take-up core comprising the steps of preparing a plurality of base paper strips formed of the same material, providing at least one of the base paper strips with elasticity, and spirally winding together the base paper strips into a tube with the base paper strip provided with elasticity being disposed so that it forms an upper one of the base paper strip-plies.

# F I G . 1

# F I G . 2

# F I G . 3

# FIG.4

EP 0 421 400 A2